(19) Europäisches Patentamt

European Patent Office

Office européen des brevets

(11) **EP 0 415 129 B1**

(12) **EUROPÄISCHE PATENTSCHRIFT**

(45) Veröffentlichungstag und Bekanntmachung des Hinweises auf die Patenterteilung:
**23.04.1997 Patentblatt 1997/17**

(51) Int Cl.⁶: **G01F 1/76**, G01F 1/84

(21) Anmeldenummer: **90115037.5**

(22) Anmeldetag: **04.08.1990**

(54) **Verfahren und Vorrichtung zur Messung des Massendurchsatzes**

Method and device to measure mass-flow

Méthode et dispositif pour la mesure du débit massique

(84) Benannte Vertragsstaaten:
**CH DE DK FR GB IT LI NL**

(30) Priorität: **31.08.1989 DE 3928839**

(43) Veröffentlichungstag der Anmeldung:
**06.03.1991 Patentblatt 1991/10**

(73) Patentinhaber: **Chi, Hung Nguyen, Dr.**
**D-72768 Reutlingen (DE)**

(72) Erfinder: **Chi, Hung Nguyen, Dr.**
**D-72768 Reutlingen (DE)**

(74) Vertreter: **Brommer, Hans Joachim, Dr.-Ing.**
**Patentanwälte Dipl.-Ing. R. Lemcke**
**Dr.-Ing. H.J. Brommer,**
**Postfach 40 26**
**76025 Karlsruhe (DE)**

(56) Entgegenhaltungen:
EP-A- 0 196 150          EP-A- 0 282 217
WO-A-88/01370          DE-A- 2 404 356
US-A- 4 444 059

• **US Reissue 31450**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft ein Verfahren und eine Vorrichtung zur Messung des Massendurchsatzes eines fließenden Strömungsmittels, das durch einen Rohrabschnitt hindurchgeleitet wird, der durch äußere Anregung alternierend verschwenkt wird, wobei der hierdurch ausgelöste Corioliseffekt zur Erzeugung einer Drehschwingung des Rohrabschnittes benutzt wird, die sich der von außen angeregten Verschwenkung überlagert, und die dadurch bewirkte Änderung der Schwingungscharakteristik zur Bestimmung des Massendurchsatzes herangezogen wird.

Die Durchflußmessung unter Ausnutzung des Corioliskaftes ist in verschiedenen Ausfürungen bekannt. Im verliegenden Fall wird von einem Stand der Tecknik gemäß der DE-A-2 404 356 ausgegangen.

Bei der DE-A-24 04 356 ist der Rohrabschnitt beweglich in einer Stützkonstruktion gelagert. Diese Stützkonstruktion führt Ihrerseits eine alternierende Drehbewegung aus, die sich dem Rohrabschnitt mitteilt und bei Durchströmung desselben eine Corioliskraft erzeugt, die eine Bewegung des Rohrabschnittes relativ zu seiner Stützkonstruktion herbeiführt. Durch Messung dieser Bewegung wird der Massendurchsatz ermittelt.

Des weiteren ist es durch die US-A-4 444 059 bekannt, parallel zu dem durchströmten Rohrabschnitt ein gleichartiges Rohr anzuordnen und es mit dem zuerst genannten Rohrabschnitt durch eine Rahmenkonstruktion zu verbinden. Diese Rahmenkonstruktion wird von außen zu Schwingungen um eine horizontale Schwenkachse angeregt; die dabei entstehenden Corioliskräfte führen zu einer Verschwenkung des Rahmens um seine vertikale Mittelachse.

Schließlich ist es durch die EP-A 282 217 bekannt, die Massendurchflußmessung an einem Leitungsabschnitt durchzuführen, der an seinen beiden Enden eingespannt ist und in seinem mittleren Bereich durch äußere Anregung zu einer seitlichen Biegeschwingung veranlaßt wird.

Der vorliegenden Erfindung liegt die Aufgabe zugrunde, ein System zur Messung des Massendurchflusses zu entwickeln, das eine wesentlich höhere Empfindlichkeit und Meßgenauigkeit als die bisher bekannten Systeme aufweist. Des weiteren soll sich die Erfindung durch einfachen, kostengünstigen und betriebssicheren Aufbau auszeichnen. Schließlich soll es auch für solche Medien geeignet sein, die während der Messung unter hohem Druck stehen.

Diese Aufgabe wird durch die Merkmale des Anspruches 1 gelöst.

An Stelle der beim Stand der Technik eintretenden Überlagerung ungleicher Schwingungseffekte wird erfindungsgemß also eine reine Drehschwingung um ein und die selbe Achse erzeugt. Sie gestattet eine wesentlich genauere Erfassung des Corioliseffektes als bisher. Dies gilt insbesondere dann, wenn in Weiterbildung der Erfindung die Phasenverschiebung zwischen der Anregungsschwingung und der durch den Corioliseffekt beeinflußten tatsächlichen Schwingung des Rohrabschnittes zur Bestimmung des Massendurchsatzes herangezogen wird, denn diese Phasendifferenz ist meßtechnisch außerordentlich genau erfaßbar.

Das erfindungsgemäße Verfahren kann dadurch mit Schwingungsamplituden arbeiten, die selbst am Ende des Rohrabschnittes noch im Millimeterbereich liegen. So beträgt der maximale Ausschlagwinkel der Drehschwingung nur wenige Winkelgrade, zweckmäßig sogar weniger als 1°.

Zur Realisierung des erfindungsgemäßen Verfahrens empfiehlt es sich, daß die - gegebenenfalls gedachte - Schwenkachse des Rohrabschnittes außermittig, insbesondere nahe dem einen Ende des Rohrschnittes angeordnet ist. Dadurch wirken die beidseits der Schwenkachse angreifenden Corioliskräfte mit unterschiedlich großem Hebelarm auf den Rohrabschnitt ein und erzeugen an ihm das gewünschte Drehmoment und damit die Coriolis-bedingte Drehschwingung, die sich der von außen angeregten Schwingung überlagert.

Zwar ist es grundsätzlich möglich, den Rohrschnitt elastisch über Lamellen oder dergleichen in seiner Stützkonstruktion aufzuhängen. Besonders zweckmäßig ist es aber, wenn er längs einer definierten, realen Schwenkachse drehbar in seiner Stützkonstruktion gelagert wird. Man erhält dadurch exakte, reproduzierbare Schwingungsverhältnisse und eine entsprechend höhere Meßgenauigkeit.

Die Schwenkachse ist vorzugsweise so positioniert, daß Sie die Rohrachse senkrecht schneidet, so daß der Rohrabschnitt eine symmetrische Schwingung durchführt. Der Rohrabschnitt kann fliegend gelagert sein; in Anbetracht der geringen Amplituden empfiehlt es sich aber, die Schwenkachse beidseits des Rohrschnittes vorzusehen und sie entweder in Kugel lagern der Stützkonstruktion zu lagern oder statt dessen Torsionsrohre zu verwenden, die fest mit dem Rohrabschnitt und der Stützkonstruktion verbunden sind. Die letztgenannte Konstruktion hat den Vorteil, daß sie absolut spielfrei ist.

Die Erzeugung der Grundschwingung des Rohrschnittes von außen erfolgt am besten berührungslos, insbesondere mittels einer an der Stützkonstruktion angeordneten Magnetspule. Damit von ihr keine Reaktionskräfte auf die Stützkonstruktion übertragen werden, kann sie unter Zwischenlage eines Dämpfungselementes an der Stützkonstruktion befestigt werden.

Zur Erfassung der resultierenden Drehschwingung des Leitungsabschnittes, die als Meßgrundlage für den Massendurchsatz dient, wird vorzugsweise ein berührungsloser Sensor verwendet. Damit läßt sich die durch den Corioliseffekt erzeugte Veränderung der Schwingungscharakteristik - sei es die Amplitudenänderung oder, was meßtechnisch günstiger ist, die Phasenverschiebung - einfach und genau erfassen.

Weitere Merkmale und Vorteile der Erfindung ergeben sich aus der nachfolgenden Beschreibung eines Ausführungsbeispieles anhand der Zeichnung; dabei zeigt

Fig. 1 einen schematischen Längsschnitt durch das erfindungsgemäße Gerät;

Fig. 2 eine Draufsicht auf das Gerät gemäß Fig. 1;

Fig. 3 einen schematischen Längsschnitt ähnlich Fig. 1, jedoch mit einer anderen Lagerung;

Fig. 4 einen Querschnitt durch das Gerät gemäß Fig. 1 und

Fig. 5 eine vektorielle Darstellung der Erreger-Drehschwingung und der Coriolis-Drehschwingung.

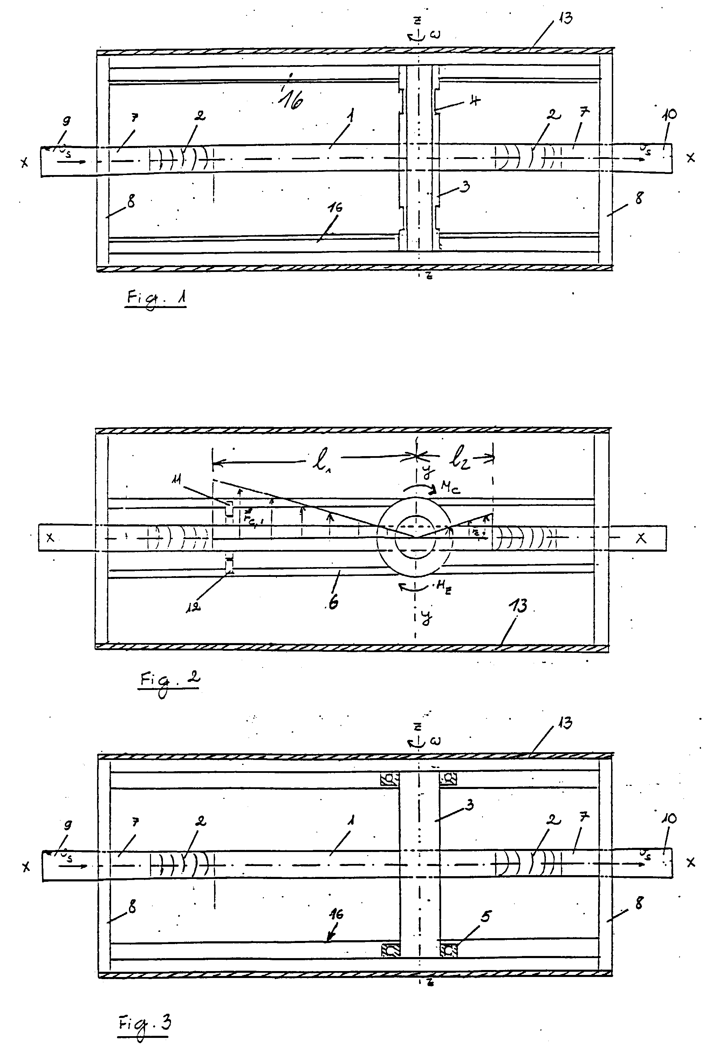

Das in den Figuren 1 bis 3 dargestellte Durchflußmeßgerät ist für strömende Medien bestimmt, die flüssig, gasförmig, mit Feststoffen versetzt, einphasig oder mehrphasig sein können. Es besteht im wesentlichen aus einer Meßleitung in Form eines dickwandigen, geradlinigen Rohrabschnittes 1, der an seinen beiden Enden mit zwei flexiblen Anschlußstücken 2 verbunden ist, die eine geringfügige Drehschwingung der Meßleitung um eine Schwenkachse 3 zulassen.

Bei den elastischen Anschlußstücken kann es sich um bekannte Bälge oder Wellschläuche handeln. Aufgrund der geringen Amplituden kommen aber auch dünnwandige Glattrohre in Betracht, die durch eine entsprechende freie Länge die gewünschte Elastizität bringen.

Die Schwenkachse 3 wird durch ein Rohr gebildet, das senkrecht von dem Rohrabschnitt 1 durchquert wird und das entweder mittels zweier dünner Torsionsrohre 4 (siehe Fig. 1) oder mittels zweier Kugellager 5 (siehe Fig. 3) in einer äußeren Stützkonstruktion 6 gelagert ist. Wesentlich ist dabei, daß die Schwenkachse 3 außermittig, also in Richtung zu einem der elastischen Anschlußstücke 2 versetzt, angeordnet ist.

Außerdem besitzt das Gerät zwei das Strömungsmittel führende, dickwandige Leitungen 7, die sich jeweils an das elastische Anschlußstück 2 anschließen und in zwei Kreisscheiben 8 der Stützkonstruktion 6 fixiert sind, desweiteren einen Leitungseinlauf 9 und einen Leitungsauslauf 10, die entsprechend der gewünschten Anschlußverbindung ausgebildet sind.

Zur Anregung der Grundschwingung ist ein Schwingungserzeuger in Form einer Magnetspule 11 an der Stützkonstruktion montiert, der mit einem gegenüberliegend am Rohrabschnitt 1 angeordneten Dauermagnet zusammenwirkt. In ähnlicher Weise erfolgt die Messung der resultierenden Drehschwingung durch einen an der Stützkonstruktion montierten Schwingungssensor 12, der mit einem gegenüberliegenden Dauermagnet am Rohrabschnitt zusammenwirkt.

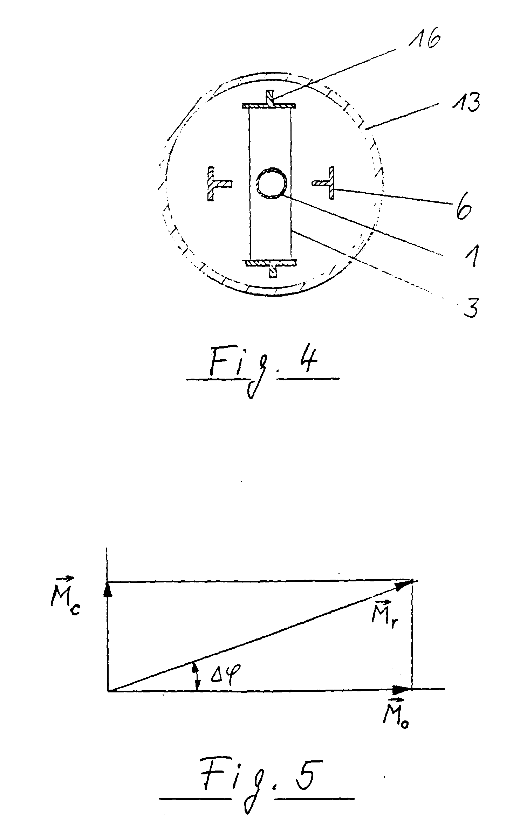

Die Stützkonstruktion 6 besteht aus mehreren axial verlaufenden Profilleisten, die an Ihren Enden mit den Kreisscheiben 8 verbunden sind. Das gesamte Gebilde ist schließlich von einem Gehäuse 13, einem dicht abgeschlossenen Rohr, umgeben, vergleiche Fig. 4.

Das Meßprinzip beruht auf folgendem:

Durch den Schwingungserzeuger 11 wird an dem Rohrabschnitt 1 eine sinusförmige Erregerschwingung um die z-Achse hervorgerufen. Das momentane Antriebsmoment sei $M_o$, das maximale Drehmoment $M_{om}$ der Drehwinkel sei $\alpha_o$ und die Drehgeschwindigkeit $w_o$. Es gilt dann:

$$M_o = D\alpha_o \sin (2 \pi \, ft) \qquad (1)$$

$$M_o = M_{om} \sin (2 \pi \, ft) \qquad (1a)$$

$$\alpha_o = \alpha_{om} \sin (2 \pi \, ft)$$

$$w_o = d(\alpha_o)/dt = 2\pi f\alpha_{om} \sin (2 \pi \, ft + \pi/2)$$

wobei D die Federkonstante des Schwingungssystems und f die Erregerfreqenz und t die Zeit ist.

Wenn ein Medium mit einer Strömungsgeschwindigkeit v durch das Gerät hindurchströmt, so entstehen in dem Leitungsabschnitt 1 Corioliskräfte Fc 1 und Fc 2, und zwar senkrecht zur Strömungsgeschwindigkeit. Aufgrund der unterschiedlichen Längen 11 und 12 sind die über der Länge integrierten Corioliskräfte über der Rohrlänge 11 größer als über der Rohrleitung 12. Dadurch wird ein resultierendes Coriolis-Drehmoment Mc erzeugt, das eine Coriolis-Drehschwingung hervorruft:

$$M_c = \dot{m}( \, l_1^2 - l_2^2 \, ) \, 2\pi f\alpha_{om} \sin (2\pi ft + \pi/2) \qquad (2)$$

$$M_c = M_{cm} \sin (2\pi ft + \pi/2) \qquad (2a)$$

wobei $\dot{m}$ der Massendurchfluß ist.

Die Coriolis-Drehschwingung überlagert sich der Grundschwingung und ergibt eine resultierende Drehschwingung mit dem Drehmoment $M_r$:

$$M_r = M_o + M_c \qquad (3)$$

Nach dem Additionsgesetz hat das resultirende Moment $M_r$ die gleiche Frequenz f, aber gegenüber der Erregerschwingung eine Phasenverschiebung $\Delta\varphi$, vergleiche Fig. 5. Hierfür gilt

$$M_r = M_{rm} \sin (2\pi ft + \Delta\varphi)$$

wobei

$$tg (\Delta\varphi) = M_{cm}/M_{om}$$

$$tg (\Delta\varphi) = (2\pi f \, ( \, l_1^2 - l_2^2 \, ) \, / \, D) \, \dot{m} \qquad (4)$$

Gleichung (4) zeigt einen linearen Zusammenhang zwischen dem Tangens der Phasendifferenz und dem gesuchten Massendurchfluß. Die Phasendifferenz ist die Differenz zwischen der Erregerdrehschwingung, die aus dem Signal des Schwingungserzeugers 11 ermittelt wird, und der resultierenden Drehschwingung, die durch den Sensor 12 erfaßt wird.

Die Phasendifferenz ist elektronisch hochgenau meßbar und direkt proportional zu dem gesuchten Massendurchfluß. Der Proportionalitätsfaktor ist eine Gerätekonstante, die unabhängig von der Strömungsgeschwindigkeit des zu messenden Mediums ist. Sie hängt lediglich noch von der Dichte des Mediums ab. Sollen Medien unterschiedlicher Dichte gemessen werden, so kann dies in einfacher Weise berücksichtigt werden, weil die Resonanzfrequenz des Schwingungssystem proportional zur Dichte ist.

Zusammenfassend bestehen die Vorteile der Erfindung darin, daß die Geräteempfindlichkeit nicht wie bisher von einer Verformung oder Verschiebung der Meßleitung abhängt, sondern von der Phasendifferenz zwischen Erregerschwingung und resultierender Schwingung, so daß mit minimalen Schwingungsamplituden gearbeitet werden kann und trotzdem ein großer Meßeffekt auftritt. Desweiteren darin, daß die Meßleitung eine definierte Drehachse aufweist, so daß exakt reproduzierbare Drehschwingungen entstehen und ein stabiler Nullpunkt gewährleistet ist. Schließlich darin, daß das Gerät aus einfachen, bewährten Komponenten besteht und daher kostengünstig herstellbar und betriebssicher ist.

**Patentansprüche**

1. Verfahren zur Messung des Massendurchsatzes eines fließenden Strömungsmittels, das durch einen Rohrabschnitt (1) hindurchgeleitet wird, der durch äußere Anregung alternierend verschwenkt wird, wobei der hierdurch ausgelöste Corioliseffekt eine Änderung der Schwingungscharakteristik bewirkt, die zur Bestimmung des Massendurchsatzes herangezogen wird,
dadurch gekennzeichnet,

daß der Corioliseffekt zur Erzeuaung einer Drehschwingung des Rohrabschnittes (1) benutzt wird, die sich der von außen angeregten Verschwenkung überlagert, daß die Schwenkachse (z) des Rohrabschnittes (1) bezogen auf die Rohrlänge außermittig angeordnet ist, derart, daß die beidseits der Schwenkachse (z) angreifenden Corioliskräfte mit unterschiedlich großen Hebelarm auf den Rohrabschnitt (1) einwirken,
daß die von außen angeregte Schwingung und die vom Corioliseffekt erzeugte Schwingung um die gleiche definierte Schwenkachse (z) ) erfolgen, so daß exakt reproduzierbare Drehschwingungen entstehen und ein stabiler Nullpunkt gewährleistet ist, und
daß die Phasendifferenz zwischen der von außen angeregten Schwingung und der durch den Corioliseffekt beeinflußten tatsächlichen Schwingung des Rohrabschnittes (1) zur Bestimmung des Massendurchsatzes dient.

2. Vefahren nach Anspruch 1,
dadurch gekennzeichnet,
daß der maximale Schwenkwinkel des Rohrabschnittes im Bereich weniger Winkelgrade liegt.

3. Verfahren nach einem der vorhergenanden Ansprüche, dadurch gekennzeichnet,
daß der maximale Schwenkwinkel weniger als 1° beträgt.

4. Gerät zur Messung des Massendurchsatzes eines fließenden Strömungsmittels durch einen zweckmäßig geradlinigen Rohrabschnitt (1), der in einer Stützkonstruktion (6) gelagert ist und alternierende Ausienkungen senkrecht zur Rohrachse ausführt und an seinen Enden an eine ankommende und eine abgehende Leitung (7) angeschlossen ist, wobei seine Schwingungscharakteristik durch den Corioliseffekt eine Änderung erfährt, die zur Bestimmung des Massendurchsatzes dient, insbesondere gemäß dem Verfahren der Ansprüche 1 bis 3, dadurch gekennzeichnet,

daß der Rohrabschnitt (1) längs einer definierten, realen Schwenkachse (3) drehbar in der Stützkonstruktion (6) gelagert ist,
daß die durch den Corioliseffekt erzeugte Schwingung des Rohrabschnittes (1) um die gleiche definierte Schwenkachse (z) wie die von außen angeregte Verschwenkung erfolgt und sich ihr überlagert und daß die Schwenkachse (z) bezogen auf die Länge des Rohrabschnittes (1) außermittig angeordnet ist und
daß ein Erreger (11) und ein Sensor (12) an eine Auswerteschaltung zur Bestimmung der Phasendifferenz zwischen der angeregten Schwingung und der resultierenden Schwingung angeschlossen sind.

5. Gerät nach Anspruch 4, dadurch gekennzeichnet, daß die Schwenkachse (3) die Achse des Rohrabschnittes (1) senkrecht schneidet.

6. Gerät nach einem der Ansprüche 4 bis 5, dadurch gekennzeichnet, daß die Schwenkachse (3) beidseits des Rohrabschnittes (1) in der Stützkonstruktion (6) angeordnet ist.

7. Gerät nach einem der Ansprüche 4 bis 6, dadurch gekennzeichnet, daß die Schwenkachse (3) in Kugellagern (5) der Stützkonstruktion (6) gelagert ist.

8. Gerät nach einem der Ansprüche 4 bis 6, dadurch gekennzeichnet, daß die Schwenkachse (3) durch zwei beidseits des Rohrabschnittes (1) abstehende Torsionsrohre (4) gebiidet ist, die fest mit dem Rohrabschnitt (1) und der Stützkonstruktion (6) verbunden sind.

9. Gerät nach einem der Ansprüche 4 bis 8, dadurch gekennzeichnet, daß die Schwingungsanregung des Rohrabschnittes (1) berührungslos, insbesondere magnetisch erfolgt.

10. Gerät nach einem der Ansprüche 4 bis 9, dadurch gekennzeichnet, daß die Schwingungsanregung des Rohrabschnittes (1) mittels des Erregers der an der Stützkonstruktion (6) angeordnet ist, insbesondere einer Magnetspule (11) erfolgt.

11. Gerät nach Anspruch 10,
dadurch gekennzeichnet,
daß der Erreger (11) unter Zwischenlage eines Dämpfungselementes an der Stützkonstruktion (6) montiert ist.

12. Gerät einem der Ansprüch 4 bis 11,
dadurch gekennzeichnet,
daß die resultierende Drehschwingung des Leitungsabschnittes (1) berührungslos durch den Sensor (12) erfaßt wird.

**Claims**

1. Method for measuring the mass throughput of a flowing flow means, which flow means is guided through a pipe section (1), said pipe section being alternatingly swivelled by external excitation, the hereby triggered Coriolis effect causing a change in the oscillation characteristic which is brought into play for the determination of the mass throughput, characterised in that
the Coriolis effect is used to generate a rotary oscillation of the pipe section (1), which rotary oscillation is superimposed upon the externally excited swivelling, in that the swivel axis (z) of the pipe section (1) referred to the pipe length is disposed off-centre such that the Coriolis forces active on either side of the swivel axis (z) act on the pipe section (1) with a moment arm of differing magnitude, in that the externally excited oscillation and the oscillation generated by the Coriolis effect take place about the same defined swivel axis (z), with the result that precisely reproducible rotary oscillations arise and a stable zero-point is guaranteed, and in that the phase difference between the externally excited oscillation and the actual oscillation of the pipe section (1) influenced by the Coriolis effect serves to determine the mass throughput.

2. Method according to Claim 1, characterised in that the maximum swivel angle of the pipe section lies in the region of a few degrees.

3. Method according to one of the preceding claims, characterised in that the maximum swivel angle amounts to less than 1°.

4. Apparatus for measuring the mass throughput of a flowing flow means through a suitably rectilinear pipe section (1) which is supported in a support structure (6) and executes alternating deflections perpendicular to the pipe axis and is connected at its ends to an incoming and an outgoing conduit (7), its oscillation characteristic experiencing due to the Coriolis effect a change serving to determine the mass throughput, especially in accordance with the method of Claims 1 to 3, characterised in that the pipe section (1) is rotatably supported in the support structure (6) along a defined, real swivel axis (3), in that the oscillation of the pipe section (1) generated by the Coriolis effect takes place about the same defined swivel axis (z) as the externally excited swivelling and is superimposed on it, and in that the swivel axis (z) referred to the length of the pipe section (1) is disposed off-centre and in that an exciter (11) and a sensor (12) are connected to an evaluation circuit for determining the phase difference between the excited oscillation and the resultant oscillation.

5. Apparatus according to Claim 4, characterised in that the swivel axis (3) cuts the axis of the pipe section (1) at right angles.

6. Apparatus according to Claim 4 or Claim 5, characterised in that the swivel axis (3) is disposed in the support structure (6) on both sides of the pipe section (1).

7. Apparatus according to one of Claims 4 to 6, characterised in that the swivel axis (3) is supported in ball bearings (5) of the support structure (6).

8. Apparatus according to one of Claims 4 to 6, characterised in that the swivel axis (3) is formed by two torsion pipes (4) standing up on either side of the pipe section (1), said torsion pipes being firmly connected to the pipe section (1) and to the support structure (6).

9. Apparatus according to one of Claims 4 to 8, characterised in that the oscillation excitation of the pipe section (1) takes place contactlessly, and especially magnetically.

10. Apparatus according to one of Claims 4 to 9, characterised in that the oscillation excitation of the pipe section (1) takes place by means of the exciter disposed on the support structure (6), and especially by means of a magnetic coil (11).

11. Apparatus according to Claim 10, characterised in that the exciter (11) is mounted on the support structure (6) by way of a damping element.

12. Apparatus according to one of Claims 4 to 11, characterised in that the resultant rotary oscillation of the conduit section (1) is contactlessly detected by the sensor (12).

## Revendications

1. Procédé pour mesurer le débit massique d'un produit en écoulement qui passe à travers une partie de tube (1) que l'on fait pivoter alternativement au moyen d'une excitation extérieure, l'effet Coriolis déclenché de ce fait produisant une modification de la caractéristique d'oscillation qui est utilisée pour déterminer le débit massique, caractérisé par le fait que l'effet Coriolis est utilisé pour engendrer une oscillation en rotation de la partie de tube (1) qui se superpose au pivotement dû à l'excitation extérieure, par le fait que l'axe de pivotement (z) de la partie de tube (1) est disposé d'une manière excentrée par rapport à la longueur du tube d'une façon telle que les forces de Coriolis appliquées des deux côtés de l'axe de pivotement (z) agissent sur la partie de tube (1) avec des bras de levier de longueurs différentes, par le fait que l'oscillation due à l'excitation extérieure et l'oscillation engendrée par l'effet Coriolis ont lieu autour du même axe de pivotement bien défini (z), de sorte qu'il se produit des oscillations en rotation exactement reproductibles et qu'un point zéro stable est assuré, et par le fait que la différence de phase entre l'oscillation due à l'excitation extérieure et l'oscillation réelle de la partie de tube (1) qui est influencée par l'effet Coriolis sert à déterminer le débit massique.

2. Procédé selon la revendication 1, caractérisé par le fait que l'angle de pivotement maximal de la partie de tube est situé dans une gamme limitée à un petit nombre de degrés.

3. Procédé selon l'une des revendications précédentes, caractérisé par le fait que l'angle de pivotement maximal est inférieur à 1°.

4. Appareil pour mesurer le débit massique d'un produit en écoulement à travers une partie de tube (1) qui est de préférence rectiligne, qui est montée dans une structure d'appui (6), qui exécute des déviations alternatives perpendiculairement à l'axe du tube et qui est raccordée à ses extrémités à un conduit (7) d'arrivée et de sortie, sa caractéristique d'oscillation subissant du fait de l'effet Coriolis une modification qui sert à déterminer le débit massique, en particulier selon le procédé des revendications 1 à 3, caractérisé par le fait que la partie de tube (1) est montée dans la structure d'appui (6) en pouvant tourner selon un axe de pivotement réel bien défini (3), par le fait que l'oscillation de la partie de tube (1) qui est engendrée par l'effet Coriolis a lieu autour du même axe de pivotement bien défini (z) que le pivotement dû à l'excitation extérieure en se superposant à celui-ci, par le fait que l'axe de pivotement (z) est disposé d'une manière excentrée par rapport à la longueur de la partie de tube (1), et par le fait qu'un excitateur (11) et un capteur (12) sont raccordés à un circuit d'exploitation destiné à déterminer la différence de phase entre l'oscillation excitée et l'oscillation résultante.

5. Appareil selon la revendication 4, caractérisé par le fait que l'axe de pivotement (3) coupe perpendiculairement l'axe de la partie de tube (1).

6. Appareil selon l'une des revendications 4 et 5, caractérisé par le fait que l'axe de pivotement (3) est disposé dans la structure d'appui (6) des deux côtés de la partie de tube (1).

7. Appareil selon l'une des revendications 4 à 6, caractérisé par le fait que l'axe de pivotement (3) est monté dans des paliers à billes (5) de la structure d'appui (6).

8. Appareil selon l'une des revendications 4 à 6, caractérisé par le fait que l'axe de pivotement (3) est constitué par deux tubes de torsion (4) qui font saillie des deux côtés de la partie de tube (1) et qui sont solidaires de la partie de tube (1) et de la structure d'appui (6).

9. Appareil selon l'une des revendications 4 à 8, caractérisé par le fait que l'excitation de l'oscillation de la partie de tube (1) a lieu sans contact, et en particulier par voie magnétique.

10. Appareil selon l'une des revendications 4 à 9, caractérisé par le fait que l'excitation de l'oscillation de la partie de tube (1) a lieu au moyen de l'excitateur qui est disposé sur la structure d'appui (6) et qui est en particulier une bobine magnétique (11).

11. Appareil selon la revendication 10, caractérisé par le fait que l'excitateur (11) est monté sur la structure d'appui (6) avec interposition d'un élément d'amortissement.

12. Appareil selon l'une des revendications 4 à 11, caractérisé par le fait que l'oscillation en rotation résultante de la partie de conduit (1) est détectée sans contact au moyen du capteur (12).

EP 0 415 129 B1

Fig. 1

Fig. 2

Fig. 3

8

Fig. 4

Fig. 5